(19) Europäisches Patentamt
European Patent Office
Office européen des brevets

(11) **EP 2 890 043 B1**

## (12) EUROPEAN PATENT SPECIFICATION

(45) Date of publication and mention
of the grant of the patent:
**12.10.2016 Bulletin 2016/41**

(51) Int Cl.:
*H04L 9/06* (2006.01)      *H04L 9/32* (2006.01)

(21) Application number: **14193866.2**

(22) Date of filing: **19.11.2014**

(54) **Space division method, space division device, and space division program**

Raumteilungsverfahren, Raumteilungsvorrichtung und Raumteilungsprogramm

Procédé, dispositif et programme de division d'espace

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2013 JP 2013264610**

(43) Date of publication of application:
**01.07.2015 Bulletin 2015/27**

(73) Proprietor: **FUJITSU LIMITED**
**Kawasaki-shi,**
**Kanagawa 211-8588 (JP)**

(72) Inventors:
• **Noma, Yui**
  **Kanagawa, 211-8588 (JP)**
• **Konoshima, Makiko**
  **Kanagawa, 211-8588 (JP)**

(74) Representative: **Hoffmann Eitle**
**Patent- und Rechtsanwälte PartmbB**
**Arabellastraße 30**
**81925 München (DE)**

(56) References cited:
• **Jim Lambers: "Three-Dimensional Coordinate Systems", Lecture 17 Notes, 1 October 2009 (2009-10-01), XP055191435, Retrieved from the Internet: URL:http://www.math.usm.edu/lambers/mat169/fall09/lecture17.pdf [retrieved on 2015-05-26]**
• **YUI NOMA ET AL: "Markov Chain Monte Carlo for Arrangement of Hyperplanes in Locality-Sensitive Hashing", JOURNAL OF INFORMATION PROCESSING, vol. 22, no. 1, 18 March 2013 (2013-03-18) , pages 44-55, XP055191518, DOI: 10.2197/ipsjjip.22.44**
• **KENGO TERASAWA ET AL: "Spherical LSH for Approximate Nearest Neighbor Search on Unit Hypersphere", 15 August 2007 (2007-08-15), ALGORITHMS AND DATA STRUCTURES; [LECTURE NOTES IN COMPUTER SCIENCE], SPRINGER BERLIN HEIDELBERG, BERLIN, HEIDELBERG, PAGE(S) 27 - 38, XP019097380, ISBN: 978-3-540-73948-7 * section 3 ***
• **KENGO TERASAWA ET AL: "Approximate Nearest Neighbor Search for a Dataset of Normalized Vectors", IEICE TRANSACTIONS ON INFORMATION AND SYSTEMS, vol. E92-D, no. 9, 1 January 2009 (2009-01-01), pages 1609-1619, XP055190861, ISSN: 0916-8532, DOI: 10.1587/transinf.E92.D.1609**

**Description**

FIELD

The embodiments discussed herein are related to space division methods, etc.

BACKGROUND

For example, when authenticating a user for various systems, a process is performed for obtaining biological information of the user and determining whether or not biological information that matches the obtained biological information exists in a pre-registered database. Now, a similarity search is effective because biological information obtained at the time of authentication hardly matches completely with the biological information obtained at the time of registration.

As to representation of the degree of similarity when performing a similarity search, there is a technique for converting feature values of biological information into a hash vector so that biological information for which the hamming distance between their hash vectors is short are specified as similar biological information.

With related techniques, feature values are converted into a hash vector by using a hyper-plane, but there are also processes where feature values are converted into a hash vector by using a hyper-sphere, and improvements to the precision can be better expected when a hyper-sphere is used.

Patent Document 1: Japanese Laid-open Patent Publication No. 2011-100395
Patent Document 2: Japanese Laid-open Patent Publication No. 2012-160047
Patent Document 3: Japanese Laid-open Patent Publication No. 10-247243
Patent Document 4: Japanese Laid-open Patent Publication No. 2008-282391
Non Patent Document 1: M. Datar, N. Immorlica, P. Indyk, V. S. Mirrokni: Locality-Sensitive Hashing Scheme Based on p-Stable Distributions, Proceedings of the twentieth annual symposium on Computational geometry (SCG) 2004
Non Patent Document 2: Jae-Pil Heo, Youngwoon Lee, Junfeng He, Shih-Fu Chang, and Sung-Eui Yoon. "Spherical hashing", In CVPR, pp. 2957-2964, 2012.
Non Patent Document 3: Kengo Terasawa and Yuzuru Tanaka. "Spherical lsh for approximate nearest neighbor search on unit hyper-sphere", In Frank K. H. A. Dehne, Jorg-Rudiger Sack, and Norbert Zeh, editors, WADS, Vol. 4619 of Lecture Notes in Computer Science, pp. 27-38. Springer, 2007.

Further background is provided In the following documents.

The article "Markov Chain Monte Carlo for Arrangement of Hyperplanes In Locality-Sensitive Hashing" by Yui Noma and Makiko Konoshima, Journal of Information Processing, Vol. 22, No. 1 (18 March 2013), discloses conventional locality-sensitive hashing with hyperplanes in section 2.1.

Lecture 17 Notes on "Three-Dimensional Coordinate Systems" by Jim Lambers, MAT 169, Fall Semester 2009-10.

With related techniques, however, a similarity search using hash vectors Is not performed with a high precision.

For example, when feature vectors are converted into hash vectors by using a hyper-sphere, there are cases where the hamming distance after the conversion into hash vectors may turn out to be small for feature vectors that are significantly different from each other, due to an influence of a worm hole. Therefore, different feature vectors may be determined erroneously as being similar feature vectors.

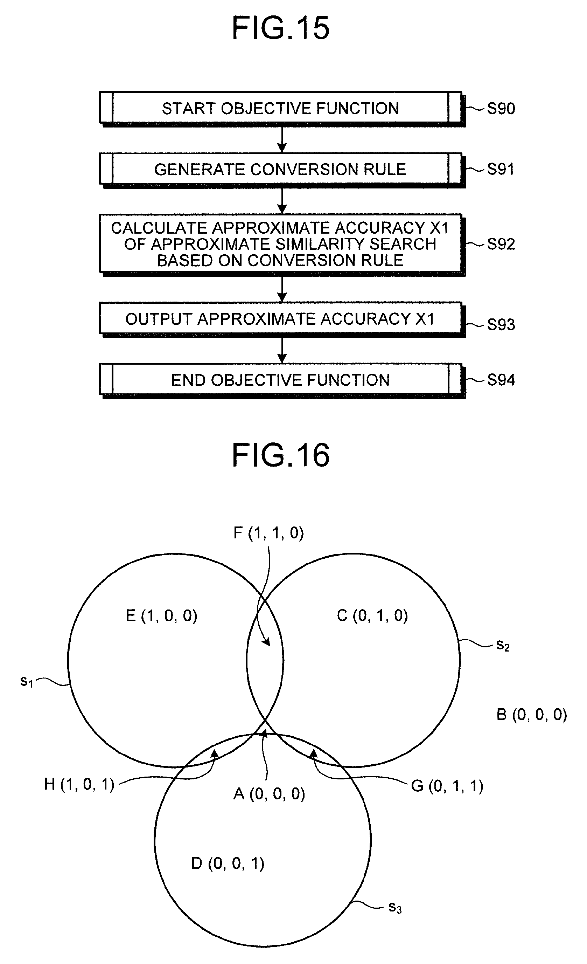

Now, a worm hole will be described. FIGS. 16 to 18 are diagrams illustrating a worm hole. For example, consider dividing an m-dimensional feature space V by using a hyper-sphere into areas, and assigning each area a bit string depending on whether the area is inside or outside the hyper-sphere. Depending on the placement of the hyper-sphere, area A and area B, not connected to each other, may have the same bit string (0,0,0), as illustrated in FIG. 16.

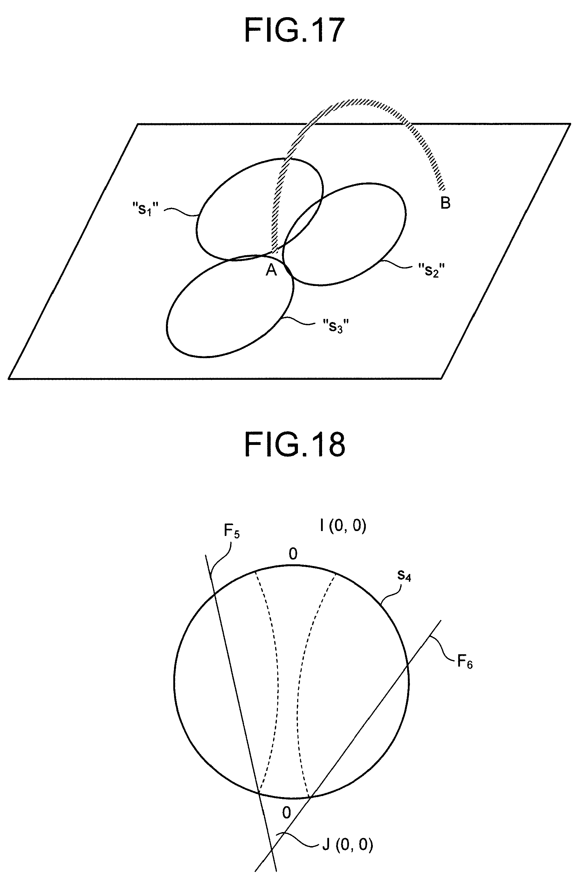

Where the phenomenon illustrated in FIG. 16 occurs, when one evaluates the similarity between feature vectors based on the hamming distance between bit strings assigned to the feature vectors, the hamming distance may turn out to be small even If the feature vectors are significantly apart from each other. In order to understand this non-connectivity, one can assume a tube 10 connecting between area A and area B, as illustrated in FIG. 17. This tube is named "a worm hole" after a particular solution of general relativity.

FIG. 18 illustrates non-connected areas occurring when dividing one-dimensional feature space into areas by using the hyper-sphere $s_4$, and a worm hole connecting between the areas. The hyper-sphere $s_4$ is divided into areas by hyper-planes $F_5$ and $F_6$. For example, an area on the left side of the hyper-plane $F_5$ is assigned "1" in its first bit, and an area on the right side of the hyper-plane $F_5$ is assigned "0" in its first bit. An area on the right side of the hyper-plane $F_6$ is assigned "1" in its second bit, and an area on the left side of the hyper-plane $F_6$ is assigned "0" in its second bit. Then, the vicinity of the south pole and the vicinity of the north pole of FIG. 18 are assigned the same bit string (0,0) even though they are not connected to each other. This is because of the worm hole connecting between the vicinity of the south pole and the vicinity of the north pole of the hyper-sphere $s_4$.

Accordingly, it is an object in one aspect of an embodiment of the invention to provide a space division method, a space division device, and a space division program, with which it is possible to perform a similarity search using feature vectors with a high precision.

SUMMARY

The present invention provides a space division method as set out in Claim 1, a space division device as set out in Claim 9, and a space division program as set out in Claim 10. Optional features are set out in the remaining claims.

BRIEF DESCRIPTION OF DRAWINGS

FIG. 1 is a diagram illustrating a system configuration of a space division device according to a first embodiment;
FIG. 2 is a diagram illustrating an inverse stereographic projection onto a hyper-sphere S;
FIG. 3 is a diagram illustrating an example of a radius of a circular image obtained by a projection of the hyper-sphere S onto a feature space V;
FIG. 4 Is a diagram illustrating an area to be subjected to an inverse stereographic projection onto the hyper-sphere S, and an example of an area obtained by the inverse stereographic projection;
FIG. 5 illustrates an example of an approximate
straight line;
FIG. 6 is a diagram illustrating an example common intersection set within the hyper-sphere S;
FIG. 7 illustrates a process as a whole.
FIG. 8 illustrates a first example of a process flow for setting a common intersection;
FIG. 9 illustrates a second example of a process flow for setting a common intersection;
FIG. 10 illustrates a third example of a process flow for setting a common intersection;
FIG. 11 is a diagram illustrating a system configuration of a space division device according to a second embodiment;
FIG. 12 illustrates a fourth example of a process flow for setting a common intersection;
FIG. 13 illustrates a fifth example of a process flow for setting a common intersection;
FIG. 14 illustrates a sixth example of a process flow for setting a common intersection;
FIG. 15 illustrates an example process flow for an objective function;
FIG. 16 is a diagram illustrating a first example explaining the occurrence of a worm hole;
FIG. 17 is a diagram illustrating a second example explaining the occurrence of a worm hole;
FIG. 18 is a diagram illustrating a third example explaining the occurrence of a worm hole; and
FIG. 19 is a diagram illustrating a hardware configuration of a space division device.

DESCRIPTION OF EMBODIMENTS

Preferred embodiments will be explained with reference to accompanying drawings. Note that the embodiments are not to limit the scope of the present invention. The embodiments can be combined with one another as long as individual processes are compatible with one another.

[a] First embodiment

System configuration of space division device

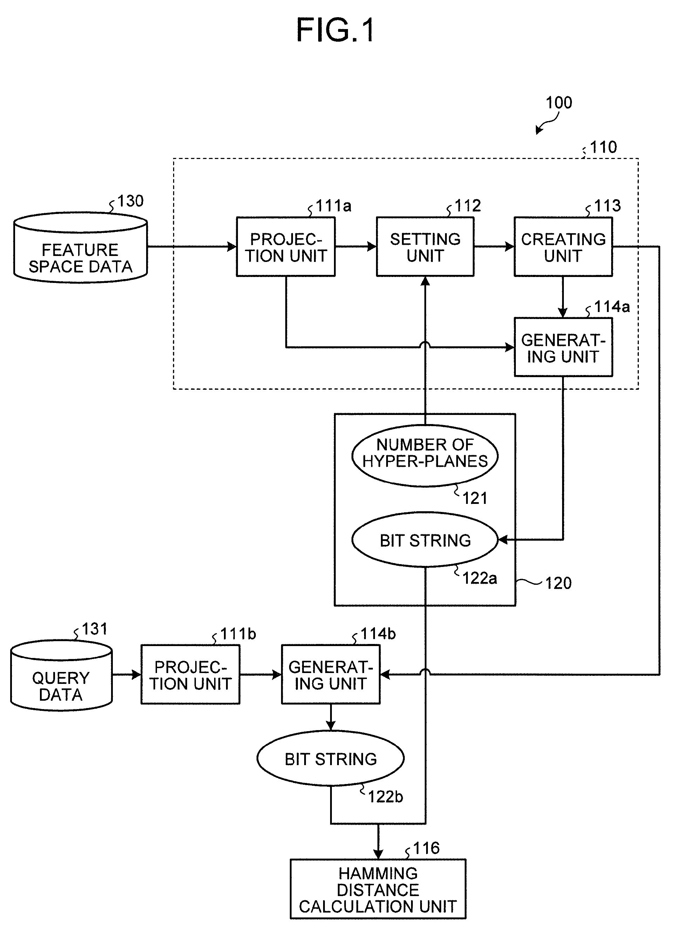

A system configuration of a space division device 100 will be described with reference to FIG. 1. FIG. 1 is a diagram illustrating a system configuration of a space division device according to a first embodiment. As illustrated in FIG. 1, the space division device 100 includes a control unit 110, a storage unit 120, and feature space data 130. The storage unit 120 includes the number 121 of hyper-planes, and a bit string 122a. The space division device 100 also includes a bit string 122b, and query data 131. The storage unit 120 corresponds to a semiconductor memory device, such as a RAM (Random Access Memory), a ROM (Read Only Memory) or a flash memory, or a storage device such as a hard disk or an optical disc, for example. Note that the feature space data 130 may be included in the storage unit 120.

The control unit 110 includes a projection unit 111a, a setting unit 112, a creating unit 113, and a generating unit 114a. The space division device 100 includes a projection unit 111b, a generating unit 114b, and a hamming distance calculation unit 116. The function of the control unit 110 can be implemented by an integrated circuit, such as an ASIC (Application Specific Integrated Circuit) or an FPGA (Field Programmable Gate Array), for example. The function of the control unit 110 can be implemented by a CPU (Central Processing Unit) executing predetermined programs. Note that the setting unit 112 is an example of the specifying unit. The creating unit 113 is an example of the placement unit.

The feature space data 130 is a storage unit storing a plurality of feature vectors. A feature vector is, for example, data of an m-dimensional feature value obtained from biological information of a user. Any of related techniques may be used as a method for obtaining a feature vector from biological information. For example, m is an integer of 1 or more. The number 121 of hyper-planes is the number of hyper-planes to be set in a space U of which the number of dimensions is higher than m by p. The bit string 122a and the bit string 122b are bit strings generated based on the feature vectors.

The projection unit 111a and the projection unit 111b are each a processing unit for subjecting the m-dimensional feature space V to an inverse stereographic projection so that the feature space V is associated with the (m+p-1)-dimensional hyper-sphere S, which is embedded in the space U of which the number of dimensions is higher than m by p. Here, p is an integer of 1 or more. In the following description, the projection units 111a and 111b will be referred to collectively as a projection unit 111.

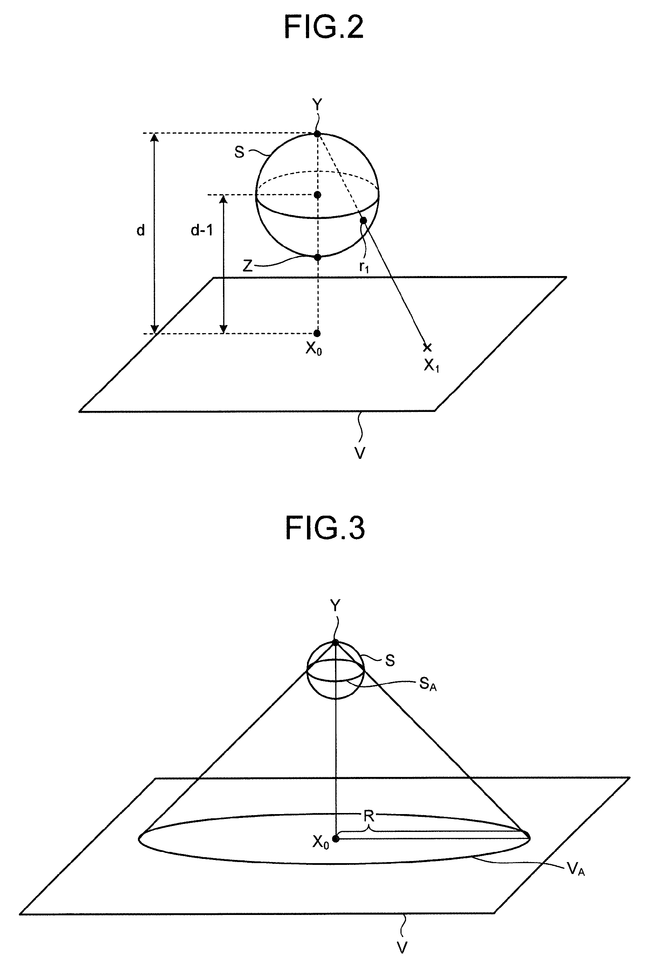

FIG. 2 is a diagram illustrating an inverse stereographic projection onto a hyper-sphere S. Through an inverse stereographic projection, a point on the feature space V is associated with a point on the hyper-sphere S, as illustrated in FIG. 2. In the example illustrated in FIG. 2, a point $X_1$ on the feature space V is associated with a point $r_1$ on the hyper-sphere S. The intersection between the feature space V and the straight line extending between the north pole Y and the south pole Z of the hyper-sphere S is defined as $X_0$. For example, a set of coordinates for the north pole Y is ($x_{S1}$, $x_{S2}$, ... , $x_{Sm}$, 1), and a set of coordinates for the south pole Z is ($x_{N1}$, $x_{N2}$, ... , $x_{Nm}$, -1).

The height from the feature space V to the north pole Y of the hyper-sphere S is defined as d. The intersection between the straight line passing through the north pole Y and the point $X_1$ and the surface of the hyper-sphere S corresponds to $r_1$. FIG. 3 is a diagram illustrating an example of a radius of a circular image obtained by a projection of the hyper-sphere S onto the feature space V. The cross section $S_A$ of the hyper-sphere S corresponds to the area $V_A$ of the feature space V, as illustrated in FIG. 3.

Now, an inverse stereographic projection is the inverse of a stereographic projection. When the hyper-sphere S and the feature space V are arranged with a straight line extending from the north pole Y to intersect the hyper-sphere S, as illustrated in FIG. 2, a stereographic projection is defined as a mapping from the intersection $r_I$ between the hyper-sphere S and the straight line onto the intersection $X_1$ between the straight line and the feature space V. Note that the example illustrated in FIG. 2 represents a case where the value of p is 1.

It is assumed that where the feature vector (coordinate set) of the feature space V is ($x_1$, $x_2$, ... , $x_m$), the inverse stereographic projection "$f^{-1}:V{\rightarrow}U$" is as expressed in Expression 1 below. Note however that $r^2$ in Expression 1 is defined by Expression 2.

$$f^{-1}\left(x_1,\cdots,x_m\right)=\left(\frac{2d(x_1-x_{o1})}{d^2+r^2}+x_{o1},\cdots,\frac{2d(x_m-x_{om})}{d^2+r^2}+x_{om},\frac{-d^2+r^2}{d^2+r^2}\right) \quad (1)$$

$$r^2=\sum_{i=1}^{m}\left(x_i-x_{oi}\right)^2 \qquad (2)$$

In Expressions 1 and 2, $x_0$ and d are parameters. The parameters $x_0$ and d correspond to $x_0$ and d illustrated in FIG. 2. The parameter $x_0$ is a coordinate of a point on the feature space V mapped onto the south pole Z of the hyper-sphere S. The parameter d is a parameter for adjusting the scale of stereographic projection, and corresponds to the radius of the hyper-sphere S when the equator of the hyper-sphere S is mapped onto the feature space V. Note that a set of coordinates for the equator of the hyper-sphere S is ($x_{S1}$, $x_{S2,}$ ... , $X_{Sm}$, 0).

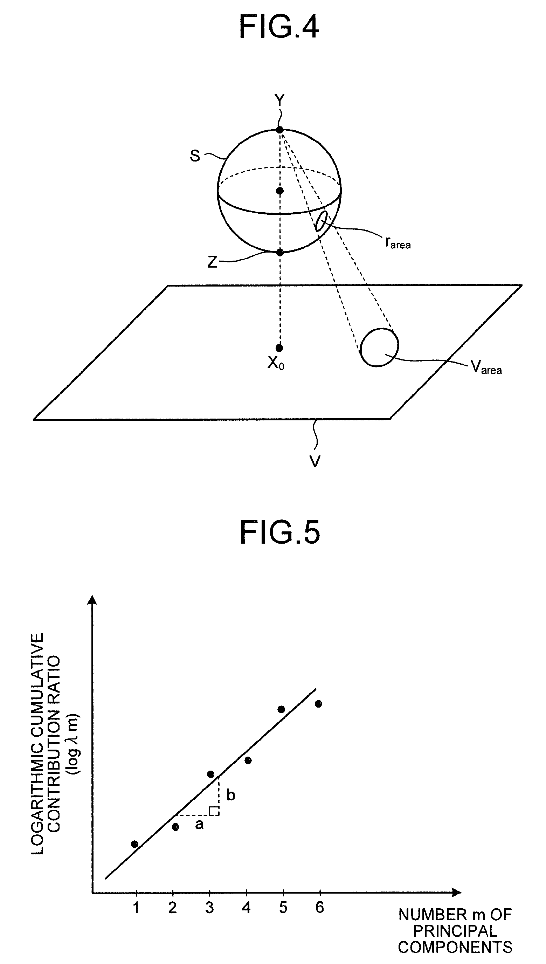

FIG. 4 is a diagram illustrating an area to be subjected to an inverse stereographic projection onto the hyper-sphere S, and an example of an area obtained by the inverse stereographic projection. As illustrated in FIG. 4, the area $V_{area}$ of the feature space V is subjected to an inverse stereographic projection onto the area $r_{area}$ on the hyper-sphere S when the projection point is the north pole Y of the hyper-sphere S.

The projection unit 111a performs an inverse stereographic projection of the feature vector based on the specified parameter $x_0$ and the parameter d and Expression 1. Note that the projection unit 111a may have the information of the parameter $x_0$ and the parameter d stored in advance therein.

The projection unit 111b performs an inverse stereographic projection based on the feature vectors stored in the query data 131 and Expression 1, thereby calculating sets of coordinates on the hyper-sphere S corresponding to the feature vectors. The projection unit 111a outputs the calculated sets of coordinates to the generating unit 114a.

The projection unit 111b performs an inverse stereographic projection based on the respective feature vectors stored in the feature space data 130 and Expression 1, thereby calculating a plurality of sets of coordinates on the hyper-sphere S corresponding to the respective feature vectors. The projection unit 111b outputs the calculated sets of coordinates to the generating unit 114b.

The generating units 114a and 114b are each a processing unit for converting a set of coordinates on the hyper-sphere S into a bit string in accordance with a conversion rule. The bit string corresponds to a hash vector. In the following description, the generating units 114a and 114b may be referred to collectively as a generating unit 114.

In Expression 3, the information of the $n \times (m+1)$ matrix "$W_{11}$. $W_{12}$, ... , $W_{n(m+1)}$" and the information of $n \times 1$ "$c_1, c_2, ... , c_n$" are a conversion rule. The generating unit 114 obtains the conversion rule from the creating unit 113. In Expression 3, the information "$x_1, x_2, ... , x_{m+1}$" is a set of coordinates on the hyper-sphere S.

$$\begin{bmatrix} W_{11} & W_{12} & W_{13} & W_{1(m+1)} \\ W_{21} & W_{22} & W_{23} & W_{2(m+1)} \\ & & & \\ W_{n1} & W_{n2} & W_{n3} & W_{n(m+1)} \end{bmatrix} \begin{bmatrix} x_1 \\ x_2 \\ \\ x_{(m+1)} \end{bmatrix} + \begin{bmatrix} c_1 \\ c_2 \\ \\ c_n \end{bmatrix} = \begin{bmatrix} b_1 \\ b_2 \\ \\ b_n \end{bmatrix} \quad (3)$$

The generating unit 114 calculates "$b_1, b_2, b_3, ... , b_n$" by solving Expression 3.

After calculating "$b_1, b_2, b_3, ... , b_n$," the generating unit 114 converts $b_N$ to "1" if the value of $b_N$ is positive and converts $b_N$ to "0" if the value of $b_N$ is not positive, thereby calculating a bit string. For example, where the values of "$b_1$, $b_2, b_3, ... , b_n$" are positive, negative, positive, ... , positive, respectively, the generating unit 114 generates a bit string "1, 0, 1, ... , 1".

The generating unit 114a generates a bit string based on sets of coordinates obtained from the projection unit 111a, and outputs the generated bit string to the hamming distance calculation unit 116.

The generating unit 114b generates a plurality of bit strings based on the sets of coordinates obtained from the projection unit 111b, and outputs the generated bit strings 122b to the hamming distance calculation unit 116. Note that the generating unit 114b may store the bit strings 122b in a storage area such as a RAM.

The hamming distance calculation unit 116 calculates the hamming distance between each bit string 122a generated by the generating unit 114a and the bit string 122b generated by the generating unit 114b. A hamming distance obtained from a comparison between two binary values having the same number of digits is the number of digits for which the binary values differ from each other. Based on the hamming distance calculation results, the hamming distance calculation unit 116 ranks the respective bit strings in an ascending order of the hamming distance with respect to the query bit string. The hamming distance calculation unit 116 may output the highest-ranked bit string as the bit string corresponding to the query bit string, or may output the ranking results.

The setting unit 112 sets, within the hyper-sphere S, a common intersection shared among hyper-planes. A common intersection is a point shared among hyper-planes. The hyper-planes set by the space division device 100 share a common intersection. The setting unit 112 sets a common intersection along a line connecting between the north pole and the south pole of the hyper-sphere S, for example. Note that the setting unit 112 may store the set common intersection in a memory such as a RAM.

The creating unit 113 is a processing unit for placing, in the hyper-sphere S, n hyper-planes across the (m+p-1)-dimensional hyper-sphere S. The creating unit 113 generates a conversion rule based on the results of the placement.

The process by which the setting unit 112 specifies initial placements of the respective hyper-planes will be described, with respect to three specific examples. A first example of the process of specifying initial placements of the respective hyper-planes will be described. The setting unit 112 obtains respective feature vectors from the feature space data 130, and calculates the square root of the eigenvalue of the variance-covariance matrix for each feature vector. The setting unit 112 specifies, as $\delta$, the largest one of the eigenvalues. The setting unit 112 also specifies the radius R of a circular image obtained by a projection of the hyper-sphere S onto the feature space V.

The setting unit 112 calculates c based on Expression 4. The setting unit 112 sets the position of the common intersection to a position shifted from the center of the hyper-sphere S by c in the m+1-dimensional direction. Note that the radius R of a circular image obtained by a projection of the hyper-sphere S onto the feature space V is illustrated in FIG. 3, for example.

$$c = \frac{2}{\left\{1 + \exp\left(\delta/R\right)\right\}} - 1 \qquad (4)$$

That is, when considering a hyper-plane whose normal vector is oriented in the $m+1^{th}$ axis direction and the radius of a hyper-sphere formed by the hyper-plane, the radius is larger as the position of the common intersection is closer to the north pole and smaller as it is closer to the south pole. The setting unit 112 adjusts the position of the common intersection based on the ratio between the approximate radius of the area where data are distributed and the radius of the sphere mapped onto the equator.

A second example of the process of specifying initial placements of the respective hyper-planes will be described. The setting unit 112 subjects the feature vectors to a principal component analysis, thereby calculating the cumulative contribution ratio. For example, the setting unit 112 performs a principal component analysis so as to obtain the spreads of the first principal component to the $N^{th}$ principal component. The setting unit 112 arranges the spreads of the respective principal components in a descending order to denote the principal components as $\delta1, \delta2, \dots, \delta N$, starting from one with the largest spread. The setting unit 112 calculates the cumulative contribution ratio $\lambda_m$. Note that m denotes the number of the principal components.

On a graph of which the horizontal axis represents the number "m" of components and the vertical axis represents the logarithmic cumulative contribution ratio "$\log\lambda_m$," the setting unit 112 plots the relationship between m and $\log\lambda_m$, thereby specifying an approximate straight line from the results of plotting. For example, the setting unit 112 specifies the approximate straight line by using the least squares method, or the like.

FIG. 5 illustrates an example of an approximate straight line. The setting unit 112 calculates the gradient b/a of the approximate straight line as "$\gamma + 1$." The setting unit 112 calculates c based on Expression 5. The setting unit 112 sets the position of the common intersection to a position shifted from the center of the hyper-sphere S by c in the m+1-dimensional direction.

$$c = \frac{2}{\left\{1 + \exp\left(\delta/\gamma R\right)\right\}} - 1 \qquad (5)$$

That is, the data distribution is considered as being elliptical, and the degree of oblateness of the ellipse can be read from the cumulative contribution ratio curve. The oblate ellipse is approximated by a circle in such a manner that the radius of the circle is dependent on the oblateness.

A third example of the process of specifying initial placements of the respective hyper-planes will be described. The setting unit 112 calculates, as v, the third-order moment in the vecN direction that is the first principal vector. For example, the setting unit 112 calculates the third-order moment based on Expression 6 below. In Expression 6, $x_i^{(k)}$ corresponds to the $i^{th}$ component of the k-th feature vector, u corresponds to the average value of the feature vectors, and K corresponds to the number of the feature vectors.

$$v = \frac{1}{K} \sum_{k=1}^{K} \sum_{i=1}^{N} \left(vecN_i \cdot (x_i^{(k)} - u_i)\right)^3 \qquad (6)$$

The setting unit 112 calculates c based on Expression 4, and $c_2$ based on Expression 7. The setting unit 112 sets the position of the common intersection to a position obtained by moving the position by c in the m+1-dimensional direction and further by $c_2$ in the vecN direction.

$$c_2 = \frac{\mathrm{sng}(v)|v|^{\frac{1}{3}}}{R} \qquad (7)$$

That is, when the deviation of data is asymmetric with respect to the average value of the data, the probability of occurrence for the positions and radii of the resultant hyper-spheres does not need to be symmetric with respect to the average value of the data. The deviation of data can be measured by the third-order moment. The position of the common intersection is shifted from the line segment connecting between the north pole and the south pole depending on the degree of deviation of the data.

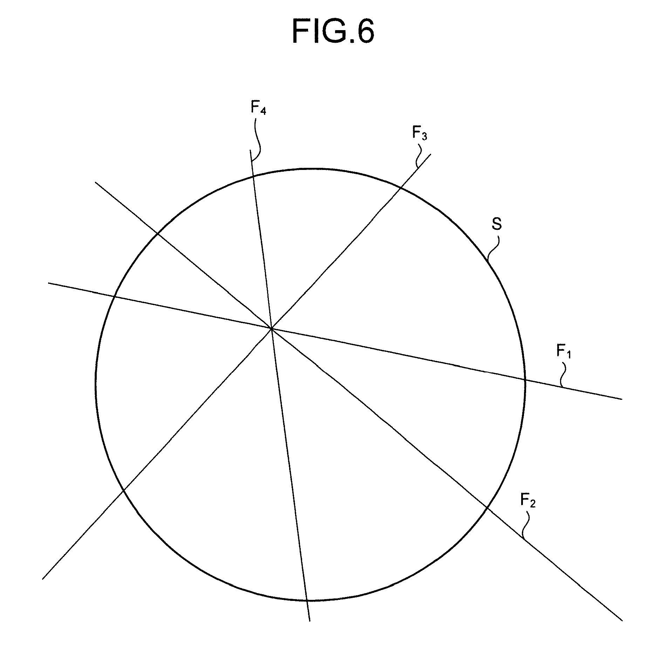

Referring to FIG. 6, the common intersection and the hyper-planes to be set within the hyper-sphere S for the first to third examples described above will be described. FIG. 6 is a diagram illustrating an example common intersection set within the hyper-sphere S. $F_1$ to $F_4$ denote hyper-planes set by the creating unit 113. As illustrated in FIG. 6, hyper-planes extending across the hyper-sphere S each pass through a common intersection that is present within the hyper-sphere S. In order to prevent a worm hole from appearing when hashing using the hyper-sphere, the intersections formed by the hyper-planes $F_1$ to $F_4$ in the space U need to be present within the hyper-sphere S. Therefore, the parameters are set so as to provide a common intersection among the hyper-planes $F_1$ to $F_4$.

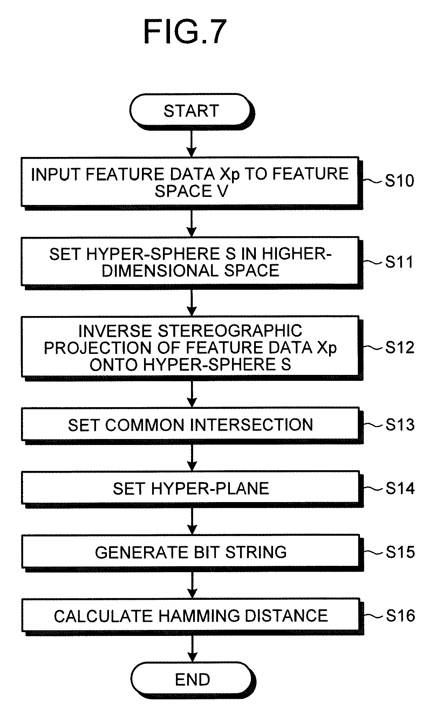

FIG. 7 illustrates a process as a whole. Feature data $X_p$ are input to the feature space V as illustrated in FIG. 7 (step S10). The projection unit 111 sets the hyper-sphere S in the space U of which the number of dimensions is higher than m by p (step S11). The projection unit 111 subjects the feature data $X_p$ to an inverse stereographic projection onto the hyper-sphere S (step S12). The setting unit 112 sets the common intersection shared among the hyper-planes within the hyper-sphere S (step S13).

The creating unit 113 sets, in the hyper-sphere S, n hyper-planes extending across the (m+p-1)-dimensional hyper-sphere S (step S14). The generating unit 114 generates a bit string based on the coordinates obtained from the projection unit 111a (step S15). The hamming distance calculation unit 116 calculates the hamming distance between each bit string 122a generated by the generating unit 114a and the bit string 122b generated by the generating unit 114b (step S16). A process flow for setting a common intersection will now be described.

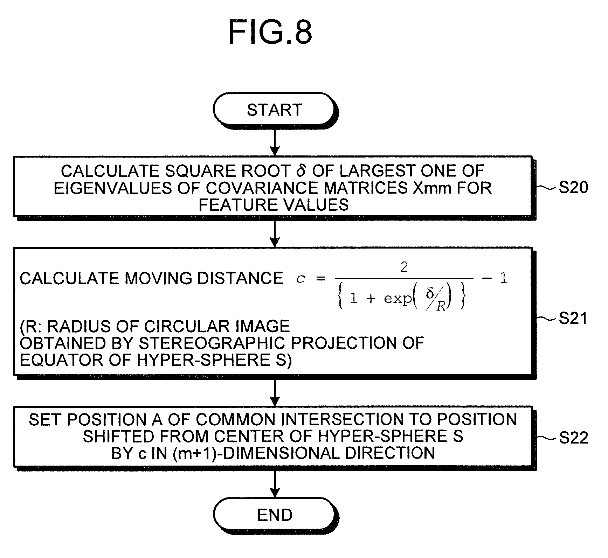

FIG. 8 illustrates a first example of a process flow for setting a common intersection. The setting unit 112 calculates the square root $\delta$ of the largest one of the eigenvalues of the covariance matrices Xmm for the feature values (step S20). The setting unit 112 calculates the moving distance c based on Expression 4 (step S21). In Expression 4, R is the radius of a circular image obtained by a stereographic projection of the equator of the hyper-sphere S. The setting unit 112 sets the position A of the common intersection to a position shifted from the center of the hyper-sphere S by c in the (m+1)-dimensional direction (step S22).

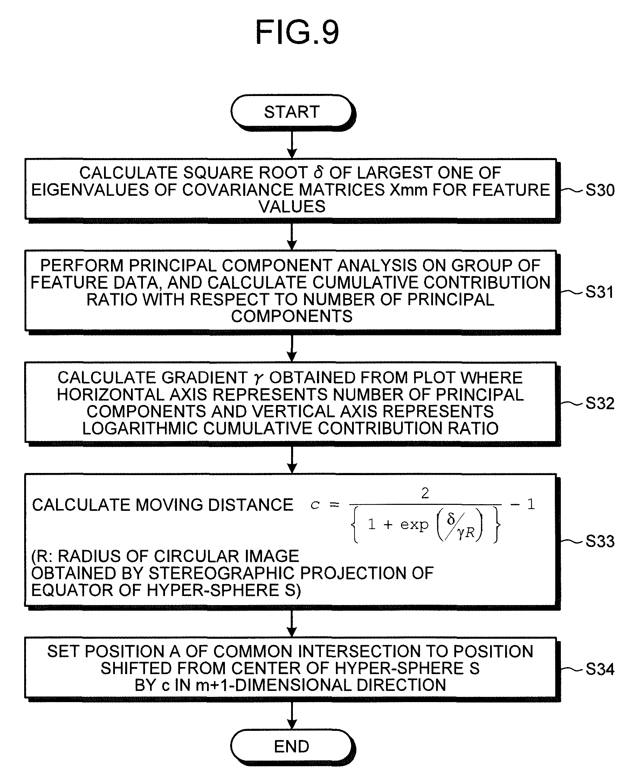

FIG. 9 illustrates a second example of a process flow for setting a common intersection. The setting unit 112 calculates the square root $\delta$ of the largest one of the eigenvalues of the covariance matrices Xmm for the feature values (step S30). The setting unit 112 performs a principal component analysis on the group of feature data, and calculates the cumulative contribution ratio with respect to the number of principal components (step S31).

The setting unit 112 calculates the gradient $\gamma$ obtained from a plot where the horizontal axis represents the number of principal components and the vertical axis represents the logarithmic cumulative contribution ratio (step S32). The setting unit 112 calculates the moving distance c based on Expression 5 (step S33). The setting unit 112 sets the position A of the common intersection to a position shifted from the center of the hyper-sphere S by c in the m+1-dimensional direction (step S34).

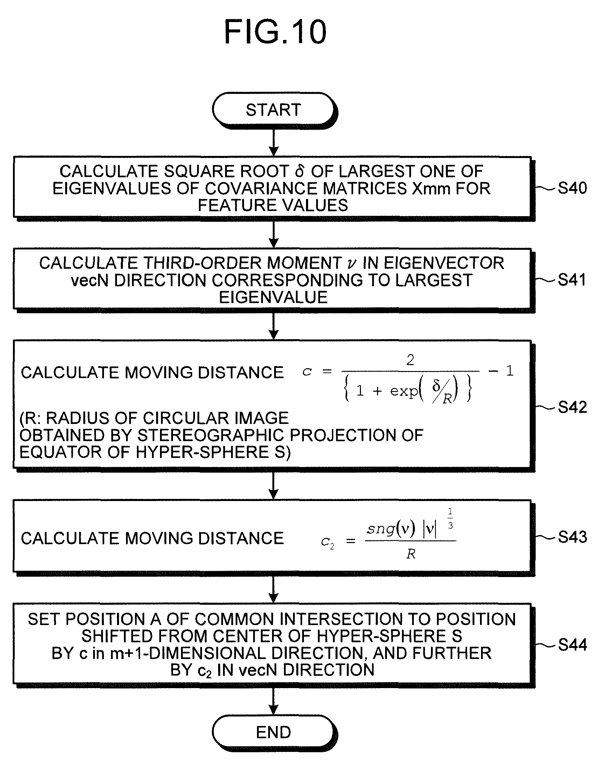

FIG. 10 illustrates a third example of a process flow for setting a common intersection. The setting unit 112 calculates the square root $\delta$ of the largest one of the eigenvalues of the covariance matrices Xmm for the feature values (step S40). The setting unit 112 calculates the third-order moment $\nu$ in the vecN direction of the eigenvector direction corresponding to the largest eigenvalue (step S41).

The setting unit 112 calculates the moving distance c based on Expression 3 (step S42). The setting unit 112 calculates the moving distance c2 based on Expression 7 (step S43). The setting unit 112 sets the position A of the common intersection to a position shifted from the center of the hyper-sphere S by c in the m+1-dimensional direction, and further by $c_2$ in the vecN direction (step S44).

[b] Second embodiment

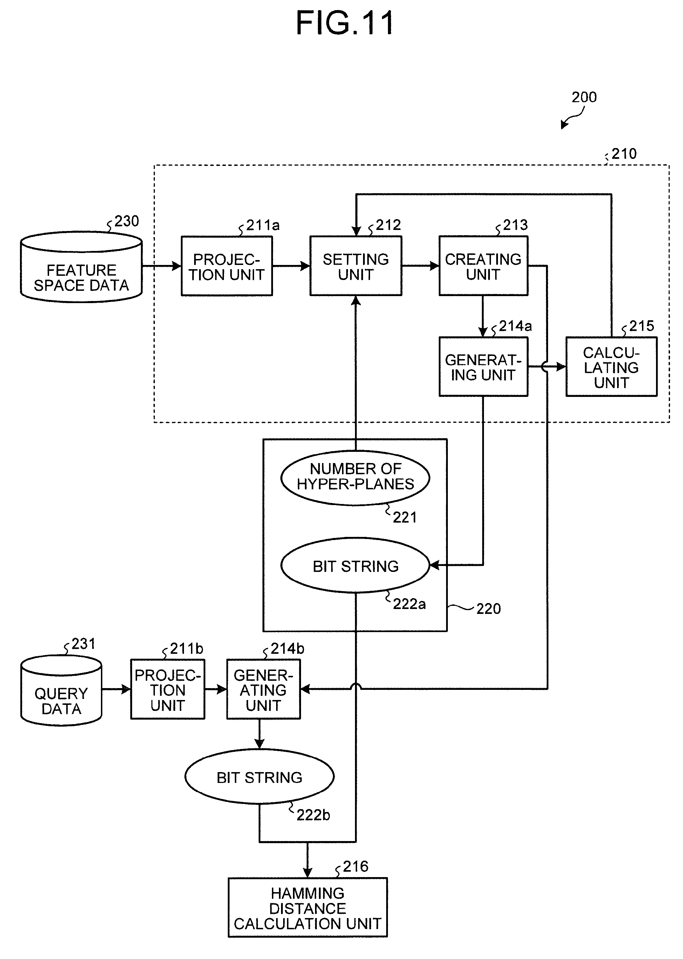

A system configuration of a space division device 200 according to a second embodiment will be described with reference to FIG. 11. FIG. 11 is a diagram illustrating a system configuration of a space division device according to the second embodiment. As illustrated in the example of FIG. 11, the space division device 200 includes a control unit 210, a storage unit 220, and feature space data 230. The storage unit 220 includes the number 221 of hyper-planes and a bit string 222a. The space division device 200 includes a bit string 222b and query data 231. The storage unit 220 corresponds to a semiconductor memory device, such as a RAM, a ROM or a flash memory, or a storage device such as a hard disk or an optical disc, for example. Note that the feature space data 230 may be included in the storage unit 220.

The control unit 210 includes a projection unit 211a, a setting unit 212, a creating unit 213, a generating unit 214a, and a calculating unit 215. The space division device 200 includes a projection unit 211b, a generating unit 214b, and a hamming distance calculation unit 216. The function of the control unit 210 can be implemented by an integrated circuit, such as an ASIC or an FPGA, for example. The function of the control unit 210 can be implemented by a CPU executing predetermined programs. Note that the setting unit 212 is an example of the specifying unit. The creating unit 213 is an example of the placement unit. The processing units of the control unit 210 will now be described.

The projection unit 111b performs an inverse stereographic projection based on the feature vectors stored in the query data 131 and Expression 1, thereby calculating sets of coordinates on the hyper-sphere S corresponding to the feature vectors.

The process by which the setting unit 212 sets a common intersection of a high approximate accuracy will be described, with respect to three specific examples. A first example of the process by which the setting unit 212 sets a common intersection of a high approximate accuracy by using the "hill-climbing search" will be described. The setting unit 212 specifies the position A as the initial value of the position of the common intersection. The calculating unit 215 obtains, from the generating unit 214a, bit strings of respective feature vectors calculated by this initial value. The calculating unit 215 calculates the approximate accuracy based on the respective feature vectors and the bit strings. For example, the approximate accuracy is calculated by Expression 8 or Expression 9 below.

$$ m_1 = \frac{|R_k \cap Q_{k'}|}{|Q_{k'}|} \tag{8} $$

$$ m_2 = \frac{|R_k \cap Q_{k'}|}{|R_k|} \tag{9} $$

Now, an example of the process of calculating the approximate accuracy will be described. The calculating unit 215 selects a feature vector $v_a$ from the feature space data 230, and specifies the first to $M^{th}$ feature vectors in terms of the proximity to the feature vector $v_a$ on the feature space. Feature vectors that are closest to the feature vector $v_a$ on the feature space are denoted as feature vectors $v_{a1}$ to $v_{aM}$. For example, in Expression 8, the number M of feature vectors corresponds to $|R_k|$.

The calculating unit 215 specifies, from the generating unit 214a, the first to $M^{th}$ bit strings in terms of the proximity to the bit string corresponding to the feature vector $v_a$, and specifies the feature vectors $v_{b1}$ to $v_{bM}$ corresponding to the specified bit strings. The calculating unit 215 counts the number of feature vectors, from among the feature vectors $v_{b1}$ to $v_{bM}$, that are the same as the feature vectors $v_{a1}$ to $v_{aM}$. The counted number corresponds to $|R_k \cap Q_k|$ in Expression 8.

The setting unit 212 sets I positions $B_i$ in the vicinity of the position A of the common intersection. The calculating unit 215 calculates the approximate accuracy for the positions $B_i$ of the common intersections. The setting unit 212 sets, as the position A, the position of the common intersection having the highest approximate accuracy. The setting unit 212 repeats this process to specify the common intersection having the highest approximate accuracy.

The hamming distance calculation unit 216 calculates the hamming distance by using the position A of the final common intersection obtained after the setting unit 212 repeats the process a predetermined number of times.

A second example in which the setting unit 212 sets the common intersection of a high approximate accuracy by using the "Markov Chain Monte Carlo method" will be described. The setting unit 212 specifies the position A of the common intersection based on the procedure according to the first embodiment. The calculating unit 215 obtains, from the generating unit 214a, bit strings of respective feature vectors generated based on the position A of the common intersection.

The calculating unit 215 performs an approximate similarity search based on the respective feature vectors and the bit strings, thereby calculating the approximate accuracy X1 where the position of the common intersection is A. For example, the approximate accuracy is calculated by Expression 8 as with the hill-climbing search.

The setting unit 212 sets a position B in the vicinity of the position A of the common intersection. The calculating unit 215 performs an approximate similarity search based on the respective feature vectors and the bit strings, thereby calculating the approximate accuracy X2 where the position of the common intersection is B.

The setting unit 212 generates a random number, and sets, as the position A, the position B of the common intersection when the value of the random number is less than X2/X1. On the other hand, a parameter setting unit 310 generates a random number, and leaves the position of the common intersection unchanged when the value of the random number is not less than X2/X1. The setting unit 212 performs this process a predetermined number of times.

A third example in which the setting unit 212 sets the common intersection of a high approximate accuracy by using the "swarm intelligence" will be described. The setting unit 212 specifies the positions of a plurality of common intersections. For example, by a method similar to the first embodiment, the setting unit 212 obtains the position of the common intersection, and further obtains a plurality of positions in the vicinity of the position of the common intersection, thus specifying the positions of a plurality of common intersections.

The setting unit 212 obtains, from the generating unit 214a, bit strings of respective feature vectors calculated based on the positions of the plurality of common intersections. The setting unit 212 regards the positions of the common intersections as being positions of charged particles, and performs a charged system search by using an objective function, thereby specifying the position of the common intersection having the highest approximate accuracy.

By regarding the positions of the common intersections as being positions of charged particles, it is possible to place a limitation that the positions of the common intersections will not come closer to each other when the positions of the common intersections are moved around. Then, it is possible to specify the position of the common intersection for which the approximate accuracy becomes highest from among positions apart from one another by a predetermined distance. Using such a position of a common intersection, the hamming distance calculation unit 216 calculates the hamming distance.

Note that the objective function of the charged system search is a function for calculating the approximate accuracy where the position of the common intersection has been given, and the process of calculating the approximate accuracy is similar to those of the hill-climbing search and the Markov Chain Monte Carlo method described above.

Next, the procedure of the space division device 200 according to the second embodiment will be described. Hereinafter, processes for specifying the position of the common intersection will be described in the following order: a parameter specifying process using the hill-climbing search; a parameter specifying process using the Markov Chain Monte Carlo method; and a parameter specifying process using the swarm intelligence.

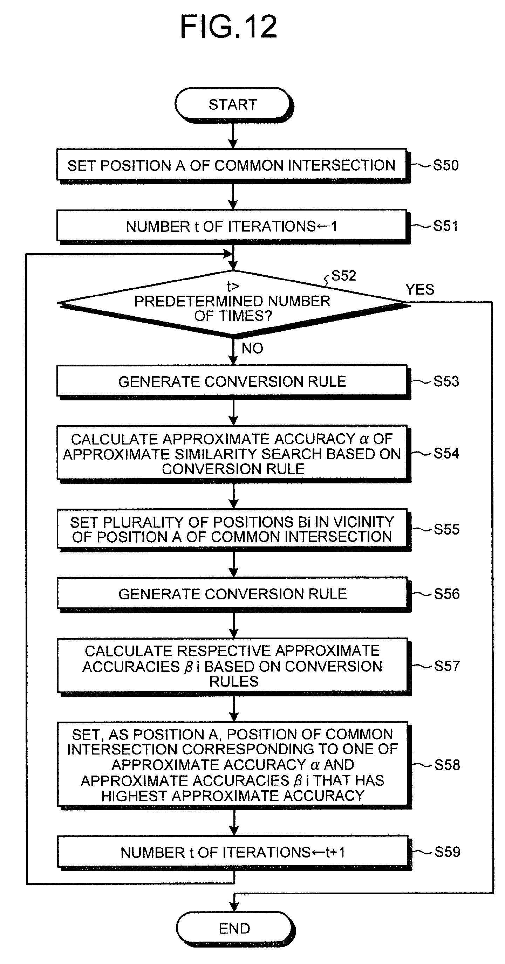

First, an example procedure of a parameter specifying process using the hill-climbing search will be described. FIG. 12 illustrates a fourth example of a process flow for setting a common intersection. The setting unit 212 of the space division device 200 specifies the position A of the common intersection, as illustrated in FIG. 12 (step S50). The setting unit 212 sets the number t of iterations to 1 (step S51). The setting unit 212 ends the process if the number t of iterations is greater than a predetermined number of times (YES in step S52). On the other hand, the setting unit 212 proceeds to step S53 if the number t of iterations is less than or equal to the predetermined number of times (NO in step S52).

The creating unit 213 generates a conversion rule based on the position A of the set common intersection (step S53). The generating unit 214a calculates the approximate accuracy $\alpha$ of the approximate similarity search based on the conversion rule (step S54).

The setting unit 212 generates a plurality of positions $B_i$ in the vicinity of the position A of the common intersection (step S55). Based on the positions $B_i$ of the common intersections, the creating unit 213 generates respective conversion rules (step S56). Based on the conversion rules, the calculating unit 215 calculates respective approximate accuracies $\beta_i$ (step S57). The setting unit 212 sets, as the position A, the position of the common intersection corresponding to one of the approximate accuracy $\alpha$ and the approximate accuracies $\beta_i$ that has the highest approximate accuracy (step S58). The setting unit 212 adds 1 to the number t of iterations (step S59).

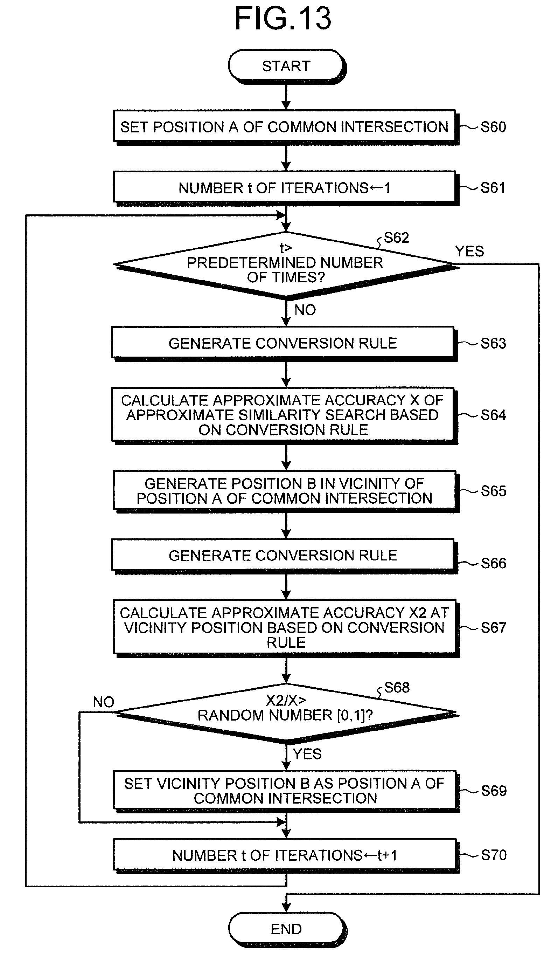

Next, an example procedure of a parameter specifying process using the Markov Chain Monte Carlo method will be described. FIG. 13 illustrates a fifth example of a process flow for setting a common intersection. The setting unit 212 of the space division device 200 specifies the position A of the common intersection, as illustrated in FIG. 13 (step S60). The setting unit 212 sets the number t of iterations to 1 (step S61). The setting unit 212 ends the process if the number t of iterations is greater than a predetermined number of times (YES in step S62). On the other hand, the setting unit 212 proceeds to step S63 if the number t of iterations is less than or equal to the predetermined number of times (NO in step S62).

The creating unit 213 generates a conversion rule based on the position A of the set common intersection (step S63). The calculating unit 215 calculates the approximate accuracy X of the approximate similarity search based on the conversion rule (step S64). The setting unit 212 generates a position B in the vicinity of the position A of the common intersection (step S65). The creating unit 213 generates a conversion rule based on the position B of the common intersection (step S66). The calculating unit 215 calculates the approximate accuracy X2 based on the conversion rule (step S67).

The setting unit 212 generates a random number [0, 1], and the setting unit 212 sets the vicinity position B as the position A of the common intersection if the random number is less than X2/X1 (YES in step S68) (step S69), and otherwise (NO in step S68) leaves the position of the common intersection unchanged and proceeds to step S70. The setting unit 212 adds 1 to the number t of iterations (step S70).

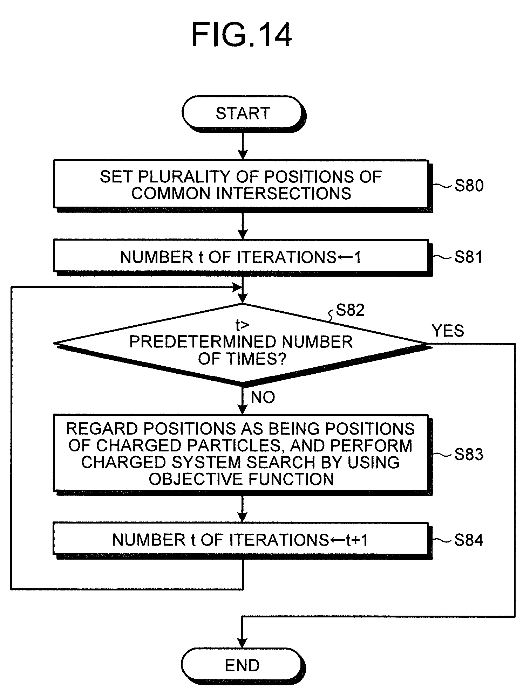

Next, an example procedure of a parameter specifying process using the swarm intelligence will be described. FIG. 14 illustrates a sixth example of a process flow for setting a common intersection. The setting unit 212 sets a plurality of positions of common intersections by, for example, the procedure according to the first embodiment (step S80).

The setting unit 212 sets the number t of iterations to 1 (step S81). The setting unit 212 ends the process if the number t of iterations is greater than a predetermined number of times (YES in step S82). On the other hand, the setting unit 212 proceeds to step S83 if the number t of iterations is less than or equal to the predetermined number of times (NO in step S82).

The setting unit 212 regards the positions of the common intersections as being positions of charged particles, and performs a charged system search by using an objective function (step S83). The setting unit 212 adds 1 to the number t of iterations (step S84).

The objective function used in the process flow of FIG. 14 will be described. FIG. 15 illustrates an example process flow for the objective function. As illustrated in FIG. 15, the creating unit 213 of the space division device 200 starts the objective function (step S90), and generates a conversion rule based on the position of the common intersection (step S91). The calculating unit 215 calculates the approximate accuracy X1 of the approximate similarity search based on the generated conversion rule (step S92) to output the approximate accuracy X1 (step S93), and ends the objective function (step S94).

Hardware configuration of space division device

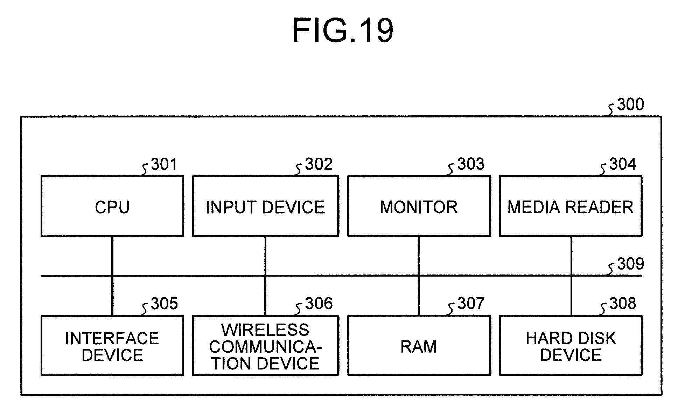

FIG. 19 is a diagram illustrating a hardware configuration of a space division device. As illustrated in FIG. 19, a computer 300 includes a CPU 301 for executing various arithmetic operations, an input device 302 for receiving data input from a user, and a monitor 303. The computer 300 also includes a media reader 304 for reading programs, etc., from storage media, an interface device 305 for making connections with other devices, and a wireless communication device 306 for making wireless connections with other devices. The computer 300 also includes a RAM (Random Access Memory) 307 for temporarily storing various information, and a hard disk device 308. The respective devices 301 to 308 are connected to a bus 309.

The hard disk device 308 stores information processing programs having similar functions to those of the processing units of the control unit 110 illustrated in FIG. 1, for example. Alternatively, the hard disk device 308 stores information processing programs having similar functions to those of the processing units of the control unit 210 illustrated in FIG. 11. The hard disk device 308 also stores various data for implementing the information processing programs.

The CPU 301 reads out and extracts the programs stored in the hard disk device 308 onto the RAM 307, and the CPU 301 executes the programs to perform various processes. These programs can make the computer 300 function as the control unit 110 illustrated in FIG. 1.

Note that the information processing programs do not need to be stored in the hard disk device 308. For example, the computer 300 may read out and execute programs stored in a storage medium that can be read by the computer 300. A storage medium that can be read by the computer 300 may be, for example, a CD-ROM, a DVD disc, a portable storage medium such as a USB (Universal Serial Bus) memory, a semiconductor memory such as a flash memory, a hard disc drive, etc. Alternatively, the programs may be stored in a device that is connected to a public network, the Internet, a LAN (Local Area Network), or the like, so that the computer 300 can read out and execute the programs therefrom.

According to one embodiment of the present invention, it is possible to perform a similarity search using feature vectors with a high precision.

**Claims**

1. A space division method performed by a computer, the method comprising:

   calculating (112) a moving distance based on a radius of a circular image that is obtained by projecting a sphere onto a feature space and on feature vectors of the feature space, the sphere being present in a space of a dimension higher than a dimension of the feature space by one dimension or more;
   specifying (112) a position of an intersection of hyper-planes that is set to a position shifted from a center of the sphere by the calculated moving distance within the sphere;
   placing (113) the hyper-planes so that the hyper-planes share the intersection of the specified position; and
   converting (114) a coordinate obtained by projecting a first feature vector onto the sphere into a first bit string in accordance with a conversion rule corresponding to the placed hyper-planes.

2. The space division method according to claim 1, wherein the specifying (112) includes setting the intersection to be shared on a line connecting between a north pole and a south pole of the sphere.

3. The space division method according to claim 1 or 2, wherein the specifying (112) includes setting the intersection to be shared based on a largest one of eigenvalues of variance-covariance matrices calculated from the first feature vector.

4. The space division method according to any one of claims 1 to 3, wherein the specifying (112) includes setting the intersection based on a moment in an eigenvector direction of a variance-covariance matrix calculated from the first feature vector.

5. The space division method according to any ane of claims 2 to 4, wherein the specifying (112) includes setting the intersection based on a cumulative contribution ratio with respect to a number of principal components calculated upon a principal component analysis performed on a group of feature data.

6. The space division method according to any one of claims 2 to 5, wherein the specifying (112) includes performing, over one or more iterations, a process of setting, as a first intersection, one intersection among a first intersection set within the sphere and one or more second intersections in a vicinity of the first intersection, the one intersection leading to a higher accuracy of a plurality of feature vectors corresponding to bit strings in a vicinity of the first bit string in approximating a plurality of feature vectors in a vicinity of the first feature vector, thus eventually determining the first intersection.

7. The space division method according to any one of claims 2 to 5, wherein the specifying (112) includes performing, over one or more iterations, a process of generating a random number and setting a second intersection as a first intersection when a value obtained by dividing an approximate accuracy resulting from a second intersection in a vicinity of the first intersection set within the sphere by an approximate accuracy resulting from the first intersection is greater than the generated random number, the approximate accuracy being an accuracy of a plurality of feature vectors corresponding to bit strings in a vicinity of the first bit string in approximating a plurality of feature vectors in a vicinity of the first feature vector, thus eventually determining the first intersection.

8. The space division method according to claim 1, wherein the specifying (112) includes:

   obtaining positions of a plurality of intersections including the intersection whose position is specified; and
   performing a charged system search by regarding the plurality of intersections as charged particles to specify one intersection leading to a highest accuracy of a plurality of feature vectors corresponding to bit strings in a vicinity of the first bit string in approximating a plurality of feature vectors in a vicinity of the first feature vector.

9. A space division device (100) comprising:

   a specifying unit(112) configured to calculate a moving distance based on a radius of a circular Image that is obtained by projecting a sphere onto a feature space and on feature vectors of the feature space, the sphere being present in a space of a dimension higher than a dimension of the feature space by one dimension or more and configured to specify a position of an intersection of hyper-planes that is set to a position shifted from a center of the sphere by the calculated moving distance within the sphere;
   a placement unit (113) configured to place the hyper-planes so that the hyper-planes share the intersection of the specified position; and
   a converting unit (114) configured to convert a coordinate obtained by projecting a first feature vector onto the sphere into a first bit string in accordance with a conversion rule corresponding to the placed hyper-planes.

10. A space division program causing a computer (300) to execute:

    calculating (112) a moving distance based on a radius of a circular image that is obtained by projecting a sphere onto a feature space and on feature vectors of the feature space, the sphere being present in a space of a dimension higher than a dimension of the feature space by one dimension or more;
    specifying (112) a position of an intersection of hyper-planes that is set to a position shifted from a center of the sphere by the calculated moving distance within the sphere;
    placing (113) the hyper-planes so that the hyper-planes share the intersection of the specified position; and
    converting (114) a coordinate obtained by projecting a first feature vector onto the sphere into a first bit string in accordance with a conversion rule corresponding to the placed hyper-planes,

**Patentansprüche**

1. Raumteilungsverfahren, das durch einen Computer durchgeführt wird, wobei das Verfahren aufweist:

   Berechnen (112) eines veränderlichen Abstands auf der Grundlage eines Radius eines kreisförmigen Bildes, das durch Projektion einer Kugelfläche auf einen Merkmalsraum und auf Merkmalsvektoren des Merkmalsraums gewonnen wird, wobei die Kugelfläche in einem Raum einer Dimension vorliegt, die um eine oder mehrere Dimensionen höher ist als eine Dimension des Merkmalsraums;
   Spezifizieren (112) einer Position eines Schnittpunkts von Hyperebenen, der an eine Position gesetzt ist, die innerhalb der Kugelfläche von einem Mittelpunkt der Kugelfläche um den berechneten veränderlichen Abstand verschoben ist;
   Platzieren (113) der Hyperebenen, so dass die Hyperebenen den Schnittpunkt der spezifizierten Position gemein haben; und

Umwandeln (114) einer Koordinate, die durch Projektion eines ersten Merkmalsvektors auf die Kugelfläche gewonnen ist, gemäß einer Umwandlungsregel, die den platzierten Hyperebenen entspricht, in eine erste Bitfolge.

2. Raumteilungsverfahren nach Anspruch 1, wobei das Spezifizieren (112) ein Setzen des gemeinsam zu verwendenden Schnittpunkts auf eine Linie beinhaltet, die einen Nordpol mit einem Südpol der Kugelfläche verbindet.

3. Raumteilungsverfahren nach Anspruch 1 oder 2, wobei das Spezifizieren (112) ein Setzen des gemeinsam zu verwendenden Schnittpunkts auf der Grundlage eines größten von Eigenwerten von Varianz-Kovarianz-Matrizen beinhaltet, die aus dem ersten Merkmalsvektor berechnet sind.

4. Raumteilungsverfahren nach einem beliebigen der Ansprüche 1 bis 3, wobei das Spezifizieren (112) ein Setzen des Schnittpunkts auf der Grundlage eines Moments in einer Eigenvektorrichtung einer Varianz-Kovarianz-Matrix beinhaltet, die aus dem ersten Merkmalsvektor berechnet ist.

5. Raumteilungsverfahren nach einem beliebigen der Ansprüche 2 bis 4, wobei das Spezifizieren (112) ein Setzen des Schnittpunkts auf der Grundlage eines kumulativen Beitragsverhältnisses hinsichtlich mehrerer Hauptkomponenten beinhaltet, die anhand einer Hauptkomponentenanalyse berechnet sind, die an einer Gruppe von Merkmalsdaten durchgeführt ist.

6. Raumteilungsverfahren nach einem beliebigen der Ansprüche 2 bis 5, wobei das Spezifizieren (112) über eine oder mehrerer Iterationen hinweg ein Durchführen eines Vorgangs zum Setzen eines Schnittpunkts aus einem ersten Schnittpunkt, der innerhalb der Kugelfläche gesetzt ist, und einem oder mehreren zweiten Schnittpunkten in einer Nähe des ersten Schnittpunkts als einen ersten Schnittpunkt beinhaltet, wobei der eine Schnittpunkt zu einer höheren Genauigkeit mehrerer Merkmalsvektoren führt, die bei der Approximierung mehrerer Merkmalsvektoren in der Nähe des ersten Merkmalsvektors Bitfolgen in einer Nähe der ersten Bitfolge entsprechen, so dass dadurch schließlich der erste Schnittpunkt bestimmt wird.

7. Raumteilungsverfahren nach einem beliebigen der Ansprüche 2 bis 5, wobei das Spezifizieren (112) über eine oder mehrere Iterationen hinweg ein Durchführen eines Vorgangs zum Erzeugen einer Zufallszahl und Setzen eines zweiten Schnittpunkts als einen ersten Schnittpunkt beinhaltet, wenn ein Wert, der durch Dividieren einer Näherungsgenauigkeit, die sich aus einem zweiten Schnittpunkt in einer Nähe des ersten Schnittpunkts ergibt, der innerhalb der Kugelfläche gesetzt ist, durch eine Näherungsgenauigkeit, die sich aus dem ersten Schnittpunkt ergibt, gewonnen wird, größer ist als die erzeugte Zufallszahl, wobei die Näherungsgenauigkeit eine Genauigkeit mehrerer Merkmalsvektoren ist, die Bitfolgen in einer Nähe der ersten Bitfolge bei der Approximierung mehrerer Merkmalsvektoren in einer Nähe des ersten Merkmalsvektors entsprechen, so dass schließlich der erste Schnittpunkt bestimmt wird.

8. Raumteilungsverfahren nach Anspruch 1, wobei das Spezifizieren (112) beinhaltet:

Gewinnen von Positionen mehrerer Schnittpunkte einschließlich des Schnittpunkts, dessen Position spezifiziert ist; und

Durchführen eines Durchsuchens eines geladenen Systems durch Betrachten der mehreren Schnittpunkte als geladene Partikel, um einen Schnittpunkt zu spezifizieren, der zu einer höchsten Genauigkeit mehrerer Merkmalsvektoren führt, die Bitfolgen in einer Nähe der ersten Bitfolge bei der Approximierung mehrerer Merkmalsvektoren in einer Nähe des ersten Merkmalsvektors entsprechen.

9. Raumteilungsvorrichtung (100), aufweisend:

eine Spezifizierungseinheit (112), die dazu eingerichtet ist, einen veränderlichen Abstand auf der Grundlage eines Radius eines kreisförmigen Bildes zu berechnen, das durch Projektion einer Kugelfläche auf einen Merkmalsraum und auf Merkmalsvektoren des Merkmalsraums gewonnen ist, wobei die Kugelfläche in einem Raum einer Dimension vorliegt, die um eine oder mehrere Dimensionen höher ist als eine Dimension des Merkmalsraums, und dazu eingerichtet ist, eine Position eines Schnittpunkts von Hyperebenen zu spezifizieren, der an eine Position gesetzt ist, die von einem Mittelpunkt der Kugelfläche innerhalb der Kugelfläche um den berechneten veränderlichen Abstand verschoben ist;

eine Platzierungseinheit (113), die dazu eingerichtet ist, die Hyperebenen so zu platzieren, dass die Hyperebenen den Schnittpunkt der spezifizierten Position gemein haben; und

eine Umwandlungseinheit (114), die dazu eingerichtet ist, eine Koordinate, die durch Projektion eines ersten Merkmalsvektors auf die Kugelfläche gewonnen ist, gemäß einer Umwandlungsregel, die den platzierten Hyperebenen entspricht, in eine erste Bitfolge umzuwandeln.

**10.** Raumteilungsprogramm, das einen Computer (300) veranlasstauszuführen:

Berechnen (112) eines veränderlichen Abstands auf der Grundlage eines Radius eines kreisförmigen Bildes, das durch Projektion einer Kugelfläche auf einen Merkmalsraum und auf Merkmalsvektoren des Merkmalsraums gewonnen wird, wobei die Kugelfläche in einem Raum einer Dimension vorliegt, die um eine oder mehrere Dimensionen höher ist als eine Dimension des Merkmalsraums;

Spezifizieren (112) einer Position eines Schnittpunkts von Hyperebenen, der an eine Position gesetzt ist, die von einem Mittelpunkt der Kugelfläche um den berechneten veränderlichen Abstand innerhalb der Kugelfläche verschoben ist;

Platzieren (113) der Hyperebenen, so dass die Hyperebenen den Schnittpunkt der spezifizierten Position gemein haben; und

Umwandeln (114) einer Koordinate, die durch Projektion eines ersten Merkmalsvektors auf die Kugelfläche gewonnen ist, gemäß einer Umwandlungsregel, die den platzierten Hyperebenen entspricht, in eine erste Bitfolge.

## Revendications

**1.** Procédé de division d'espace exécuté par un ordinateur, le procédé comprenant :

le calcul (112) d'une distance de déplacement sur la base d'un rayon d'une image circulaire qui est obtenue en projetant une sphère sur un espace de caractéristique et sur des vecteurs de caractéristiques de l'espace de caractéristique, la sphère étant présente dans un espace qui présente une dimension supérieure à une dimension de l'espace de caractéristique selon une dimension ou plus ;

la spécification (112) d'une position d'une intersection d'hyper-plans qui est définie sur une position décalée par rapport à un centre de la sphère par la distance de déplacement calculée au sein de la sphère ;

le placement (113) des hyper-plans de sorte que les hyper-plans partagent l'intersection de la position spécifiée ; et

la conversion (114) d'une coordonnée obtenue en projetant un premier vecteur de caractéristique sur la sphère en une première chaîne de bits selon une règle de conversion qui correspond aux hyper-plans placés.

**2.** Procédé de division d'espace selon la revendication 1, dans lequel la spécification (112) comprend la définition de l'intersection comme étant partagée sur une ligne qui relie un pôle nord et un pôle sud de la sphère.

**3.** Procédé de division d'espace selon la revendication 1 ou 2, dans lequel la spécification (112) comprend la définition de l'intersection comme étant partagée sur la base d'une plus élevée des valeurs propres de matrices de variance/covariance calculées à partir du premier vecteur de caractéristique.

**4.** Procédé de division d'espace selon l'une quelconque des revendications 1 à 3, dans lequel la spécification (112) comprend la définition de l'intersection sur la base d'un moment dans une direction de vecteur propre d'une matrice de variance/covariance calculée à partir du premier vecteur de caractéristique.

**5.** Procédé de division d'espace selon l'une quelconque des revendications 2 à 4, dans lequel la spécification (112) comprend la définition de l'intersection sur la base d'un rapport de contribution cumulatif par rapport à un nombre de composantes principales calculé lors d'une analyse de composantes principales effectuée sur un groupe de données de caractéristiques.

**6.** Procédé de division d'espace selon l'une quelconque des revendications 2 à 5, dans lequel la spécification (112) comprend l'exécution, sur une ou plusieurs itération(s), d'un processus de définition, en guise de première intersection, d'une intersection parmi une première intersection définie au sein de la sphère et une ou plusieurs secondes intersections à proximité de la première intersection, ladite intersection permettant une plus grande exactitude d'une pluralité de vecteurs de caractéristiques qui correspondent à des chaînes de bits à proximité de la première chaîne de bits lors de l'approximation d'une pluralité de vecteurs de caractéristiques à proximité du premier vecteur de caractéristique, afin de déterminer la première intersection.

7. Procédé de division d'espace selon l'une quelconque des revendications 2 à 5, dans lequel la spécification (112) comprend l'exécution, sur une ou plusieurs itération(s), d'un processus de génération d'un nombre aléatoire et de définition d'une seconde intersection en guise de première intersection lorsqu'une valeur obtenue en divisant une exactitude approximative qui résulte d'une seconde intersection à proximité de la première intersection définie au sein de la sphère par une exactitude approximative qui résulte de la première intersection est supérieure au nombre aléatoire généré, l'exactitude approximative étant une exactitude d'une pluralité de vecteurs de caractéristiques qui correspondent à des chaînes de bits à proximité de la première chaîne de bits lors de l'approximation d'une pluralité de vecteurs de caractéristiques à proximité du premier vecteur de caractéristique, afin de déterminer la première intersection.

8. Procédé de division d'espace selon la revendication 1, dans lequel la spécification (112) comprend :

l'obtention des positions d'une pluralité d'intersections qui comprennent l'intersection dont la position est spécifiée ; et
l'exécution d'une recherche de système chargé en considérant la pluralité d'intersections comme des particules chargées afin de spécifier une intersection qui permet d'obtenir la meilleure exactitude possible d'une pluralité de vecteurs de caractéristiques qui correspondent à des chaînes de bits à proximité de la première chaîne de bits lors de l'approximation d'une pluralité de vecteurs de caractéristiques à proximité du premier vecteur de caractéristique.

9. Dispositif de division d'espace (100) qui comprend :

une unité de spécification (112) configurée pour calculer une distance de déplacement sur la base d'un rayon d'une image circulaire qui est obtenue en projetant une sphère sur un espace de caractéristique et sur des vecteurs de caractéristiques de l'espace de caractéristique, la sphère étant présente dans un espace qui présente une dimension supérieure à une dimension de l'espace de caractéristique selon une dimension ou plus, et configurée pour spécifier une position d'une intersection d'hyper-plans qui est définie sur une position décalée par rapport à un centre de la sphère par la distance de déplacement calculée au sein de la sphère ;
une unité de placement (113) configurée pour placer les hyper-plans de sorte que les hyper-plans partagent l'intersection de la position spécifiée ; et
une unité de conversion (114) configurée pour convertir une coordonnée obtenue en projetant un premier vecteur de caractéristique sur la sphère en une première chaîne de bits selon une règle de conversion qui correspond aux hyper-plans placés.

10. Programme de division d'espace qui permet un ordinateur (300) d'exécuter :

le calcul (112) d'une distance de déplacement sur la base d'un rayon d'une image circulaire qui est obtenue en projetant une sphère sur un espace de caractéristique et sur des vecteurs de caractéristiques de l'espace de caractéristique, la sphère étant présente dans un espace qui présente une dimension supérieure à une dimension de l'espace de caractéristique selon une dimension ou plus ;
la spécification (112) d'une position d'une intersection d'hyper-plans qui est définie sur une position décalée par rapport à un centre de la sphère par la distance de déplacement calculée au sein de la sphère ;
le placement (113) des hyper-plans de sorte que les hyper-plans partagent l'intersection de la position spécifiée ; et
la conversion (114) d'une coordonnée obtenue en projetant un premier vecteur de caractéristique sur la sphère en une première chaîne de bits selon une règle de conversion qui correspond aux hyper-plans placés.

# FIG.1

# FIG.2

# FIG.3

# FIG.4

# FIG.5

# FIG.6

# FIG.7

```
┌─────────────┐
│    START    │
└─────────────┘
       │
       ▼
┌──────────────────────────────────┐
│ INPUT FEATURE DATA Xp TO FEATURE │ ─ S10
│            SPACE V               │
└──────────────────────────────────┘
       │
       ▼
┌──────────────────────────────────┐
│  SET HYPER-SPHERE S IN HIGHER-   │ ─ S11
│       DIMENSIONAL SPACE          │
└──────────────────────────────────┘
       │
       ▼
┌──────────────────────────────────┐
│     INVERSE STEREOGRAPHIC        │
│ PROJECTION OF FEATURE DATA Xp    │ ─ S12
│     ONTO HYPER-SPHERE S          │
└──────────────────────────────────┘
       │
       ▼
┌──────────────────────────────────┐
│     SET COMMON INTERSECTION      │ ─ S13
└──────────────────────────────────┘
       │
       ▼
┌──────────────────────────────────┐
│         SET HYPER-PLANE          │ ─ S14
└──────────────────────────────────┘
       │
       ▼
┌──────────────────────────────────┐
│       GENERATE BIT STRING        │ ─ S15
└──────────────────────────────────┘
       │
       ▼
┌──────────────────────────────────┐
│    CALCULATE HAMMING DISTANCE    │ ─ S16
└──────────────────────────────────┘
       │
       ▼
┌─────────────┐
│     END     │
└─────────────┘
```

# FIG.8

START

CALCULATE SQUARE ROOT $\delta$ OF LARGEST ONE OF EIGENVALUES OF COVARIANCE MATRICES Xmm FOR FEATURE VALUES ⟶ S20

CALCULATE MOVING DISTANCE $c = \dfrac{2}{\left\{1 + \exp\left(\delta / R\right)\right\}} - 1$

(R: RADIUS OF CIRCULAR IMAGE OBTAINED BY STEREOGRAPHIC PROJECTION OF EQUATOR OF HYPER-SPHERE S) ⟶ S21

SET POSITION A OF COMMON INTERSECTION TO POSITION SHIFTED FROM CENTER OF HYPER-SPHERE S BY c IN (m+1)-DIMENSIONAL DIRECTION ⟶ S22

END

# FIG.9

START

CALCULATE SQUARE ROOT $\delta$ OF LARGEST ONE OF EIGENVALUES OF COVARIANCE MATRICES Xmm FOR FEATURE VALUES ～S30

PERFORM PRINCIPAL COMPONENT ANALYSIS ON GROUP OF FEATURE DATA, AND CALCULATE CUMULATIVE CONTRIBUTION RATIO WITH RESPECT TO NUMBER OF PRINCIPAL COMPONENTS ～S31

CALCULATE GRADIENT $\gamma$ OBTAINED FROM PLOT WHERE HORIZONTAL AXIS REPRESENTS NUMBER OF PRINCIPAL COMPONENTS AND VERTICAL AXIS REPRESENTS LOGARITHMIC CUMULATIVE CONTRIBUTION RATIO ～S32

CALCULATE MOVING DISTANCE $c = \dfrac{2}{\left\{ 1 + \exp\left( \delta/\gamma R \right) \right\}} - 1$

(R: RADIUS OF CIRCULAR IMAGE
OBTAINED BY STEREOGRAPHIC PROJECTION OF
EQUATOR OF HYPER-SPHERE S) ～S33

SET POSITION A OF COMMON INTERSECTION TO POSITION SHIFTED FROM CENTER OF HYPER-SPHERE S BY c IN m+1-DIMENSIONAL DIRECTION ～S34

END

# FIG.10

```
START
```

CALCULATE SQUARE ROOT δ OF LARGEST ONE OF
EIGENVALUES OF COVARIANCE MATRICES Xmm FOR
FEATURE VALUES — S40

CALCULATE THIRD-ORDER MOMENT $\nu$ IN EIGENVECTOR
vecN DIRECTION CORRESPONDING TO LARGEST
EIGENVALUE — S41

CALCULATE MOVING DISTANCE $\quad c = \dfrac{2}{\left\{ 1 + \exp\left( \delta/R \right) \right\}} - 1$

(R: RADIUS OF CIRCULAR IMAGE
OBTAINED BY STEREOGRAPHIC PROJECTION OF
EQUATOR OF HYPER-SPHERE S) — S42

CALCULATE MOVING DISTANCE $\quad c_2 = \dfrac{sng(v)\, |v|^{\frac{1}{3}}}{R}$ — S43

SET POSITION A OF COMMON INTERSECTION TO POSITION
SHIFTED FROM CENTER OF HYPER-SPHERE S
BY c in m+1-DIMENSIONAL DIRECTION, AND FURTHER
BY $c_2$ IN vecN DIRECTION — S44

```
END
```

# FIG.11

# FIG.12

```
                    ┌──────────────┐
                    │    START     │
                    └──────┬───────┘
                           │
                           ▼
         ┌──────────────────────────────────────────┐
         │ SET POSITION A OF COMMON INTERSECTION     │── S50
         └──────────────────┬───────────────────────┘
                            │
                            ▼
         ┌──────────────────────────────────────────┐
         │ NUMBER t OF ITERATIONS←1                  │── S51
         └──────────────────┬───────────────────────┘
                            │
                            ▼
              ┌─────────────────────────┐  S52
              │          t>             │              YES
         ─────┤ PREDETERMINED NUMBER    ├──────────────────┐
              │        OF TIMES?        │                  │
              └────────────┬────────────┘                  │
                           │ NO                            │
                           ▼                               │
         ┌──────────────────────────────────────────┐      │
         │ GENERATE CONVERSION RULE                  │── S53 │
         └──────────────────┬───────────────────────┘      │
                            │                              │
                            ▼                              │
         ┌──────────────────────────────────────────┐      │
         │ CALCULATE APPROXIMATE ACCURACY α OF       │      │
         │ APPROXIMATE SIMILARITY SEARCH BASED ON    │── S54 │
         │ CONVERSION RULE                           │      │
         └──────────────────┬───────────────────────┘      │
                            │                              │
                            ▼                              │
         ┌──────────────────────────────────────────┐      │
         │ SET PLURALITY OF POSITIONS Bi IN VICINITY │── S55 │
         │ OF POSITION A OF COMMON INTERSECTION      │      │
         └──────────────────┬───────────────────────┘      │
                            │                              │
                            ▼                              │
         ┌──────────────────────────────────────────┐      │
         │ GENERATE CONVERSION RULE                  │── S56 │
         └──────────────────┬───────────────────────┘      │
                            │                              │
                            ▼                              │
         ┌──────────────────────────────────────────┐      │
         │ CALCULATE RESPECTIVE APPROXIMATE          │      │
         │ ACCURACIES βi BASED ON CONVERSION         │── S57 │
         │ RULES                                     │      │
         └──────────────────┬───────────────────────┘      │
                            │                              │
                            ▼                              │
         ┌──────────────────────────────────────────┐      │
         │ SET, AS POSITION A, POSITION OF COMMON    │      │
         │ INTERSECTION CORRESPONDING TO ONE OF      │      │
         │ APPROXIMATE ACCURACY α AND                │── S58 │
         │ APPROXIMATE ACCURACIES βi THAT HAS        │      │
         │ HIGHEST APPROXIMATE ACCURACY              │      │
         └──────────────────┬───────────────────────┘      │
                            │                              │
                            ▼                              │
         ┌──────────────────────────────────────────┐      │
         │ NUMBER t OF ITERATIONS←t+1                │── S59 │
         └──────────────────┬───────────────────────┘      │
                            │                              │
                            └──────────────────────────────┘
                                        │
                                        ▼
                              ┌──────────────┐
                              │     END      │
                              └──────────────┘
```

# FIG.13

```
                    ┌──────────┐
                    │  START   │
                    └──────────┘
                          │
                          ▼
   ┌─────────────────────────────────────────────┐
   │  SET POSITION A OF COMMON INTERSECTION      │──S60
   └─────────────────────────────────────────────┘
                          │
                          ▼
   ┌─────────────────────────────────────────────┐
   │       NUMBER t OF ITERATIONS←1              │──S61
   └─────────────────────────────────────────────┘
                          │
                          ▼
                      ◇ S62
            t> PREDETERMINED NUMBER         YES
                OF TIMES?          ──────────────┐
                          │ NO                    │
                          ▼                       │
   ┌─────────────────────────────────────────────┐│
   │       GENERATE CONVERSION RULE              │──S63
   └─────────────────────────────────────────────┘│
                          │                       │
                          ▼                       │
   ┌─────────────────────────────────────────────┐│
   │  CALCULATE APPROXIMATE ACCURACY X OF        ││
   │  APPROXIMATE SIMILARITY SEARCH BASED        │──S64
   │  ON CONVERSION RULE                         ││
   └─────────────────────────────────────────────┘│
                          │                       │
                          ▼                       │
   ┌─────────────────────────────────────────────┐│
   │  GENERATE POSITION B IN VICINITY OF         ││
   │  POSITION A OF COMMON INTERSECTION          │──S65
   └─────────────────────────────────────────────┘│
                          │                       │
                          ▼                       │
   ┌─────────────────────────────────────────────┐│
   │       GENERATE CONVERSION RULE              │──S66
   └─────────────────────────────────────────────┘│
                          │                       │
                          ▼                       │
   ┌─────────────────────────────────────────────┐│
   │  CALCULATE APPROXIMATE ACCURACY X2 AT       ││
   │  VICINITY POSITION BASED ON CONVERSION      │──S67
   │  RULE                                       ││
   └─────────────────────────────────────────────┘│
                          │                       │
                          ▼                       │
         NO           ◇ S68                       │
   ┌──────────  X2/X> RANDOM NUMBER [0,1]?        │
   │                      │ YES                   │
   │                      ▼                       │
   │  ┌──────────────────────────────────────────┐│
   │  │ SET VICINITY POSITION B AS POSITION A OF ││
   │  │ COMMON INTERSECTION                      │──S69
   │  └──────────────────────────────────────────┘│
   │                      │                       │
   │                      ▼                       │
   │  ┌──────────────────────────────────────────┐│
   └─▶│     NUMBER t OF ITERATIONS←t+1           │──S70
      └──────────────────────────────────────────┘│
                          │                       │
                          ▼                       │
                    ┌──────────┐                  │
                    │   END    │◀─────────────────┘
                    └──────────┘
```

# FIG.14

```
                    ┌─────────────┐
                    │    START    │
                    └──────┬──────┘
                           │
                           ▼
        ┌──────────────────────────────────────┐
        │   SET PLURALITY OF POSITIONS OF       │  ~S80
        │       COMMON INTERSECTIONS            │
        └──────────────────┬───────────────────┘
                           │
                           ▼
        ┌──────────────────────────────────────┐
        │   NUMBER t OF ITERATIONS←1            │  ~S81
        └──────────────────┬───────────────────┘
                           │
           ┌───────────────▼────────────────┐
           │              t>                 │  S82          YES
           │   PREDETERMINED NUMBER          │──────────────────┐
           │        OF TIMES?                │                  │
           └───────────────┬─────────────────┘                  │
                           │ NO                                 │
                           ▼                                    │
        ┌──────────────────────────────────────┐               │
        │   REGARD POSITIONS AS BEING POSITIONS │               │
        │   OF CHARGED PARTICLES, AND PERFORM   │  ~S83         │
        │   CHARGED SYSTEM SEARCH BY USING      │               │
        │       OBJECTIVE FUNCTION              │               │
        └──────────────────┬───────────────────┘               │
                           │                                    │
                           ▼                                    │
        ┌──────────────────────────────────────┐               │
        │   NUMBER t OF ITERATIONS←t+1          │  ~S84         │
        └──────────────────┬───────────────────┘               │
                           │                                    │
                           └────────────────────────────────┐  │
                                                             ▼  ▼
                                                      ┌─────────────┐
                                                      │     END     │
                                                      └─────────────┘
```

# FIG.15

| | |
|---|---|
| START OBJECTIVE FUNCTION | ~S90 |

$\downarrow$

| | |
|---|---|
| GENERATE CONVERSION RULE | ~S91 |

$\downarrow$

| | |
|---|---|
| CALCULATE APPROXIMATE ACCURACY X1 OF APPROXIMATE SIMILARITY SEARCH BASED ON CONVERSION RULE | ~S92 |

$\downarrow$

| | |
|---|---|
| OUTPUT APPROXIMATE ACCURACY X1 | ~S93 |

$\downarrow$

| | |
|---|---|
| END OBJECTIVE FUNCTION | ~S94 |

# FIG.16

F (1, 1, 0)

E (1, 0, 0)          C (0, 1, 0)

$s_1$                                    $s_2$

                                    B (0, 0, 0)

H (1, 0, 1)          A (0, 0, 0)          G (0, 1, 1)

D (0, 0, 1)

$s_3$

# FIG.17

# FIG.18

# FIG.19

300

| 301 | 302 | 303 | 304 |
|---|---|---|---|
| CPU | INPUT DEVICE | MONITOR | MEDIA READER |

309

| 305 | 306 | 307 | 308 |
|---|---|---|---|
| INTERFACE DEVICE | WIRELESS COMMUNICA-TION DEVICE | RAM | HARD DISK DEVICE |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011100395 A
- JP 2012160047 A
- JP 10247243 A
- JP 2008282391 A

### Non-patent literature cited in the description

- **M. DATAR ; N. IMMORLICA ; P. INDYK ; V. S. MIRROKNI.** *Locality-Sensitive Hashing Scheme Based on p-Stable Distributions, Proceedings of the twentieth annual symposium on Computational geometry (SCG),* 2004
- **JAE-PIL HEO ; YOUNGWOON LEE ; JUNFENG HE ; SHIH-FU CHANG ; SUNG-EUI YOON.** Spherical hashing. *CVPR,* 2012, 2957-2964
- Spherical lsh for approximate nearest neighbor search on unit hyper-sphere. **KENGO TERASAWA ; YUZURU TANAKA.** WADS, Vol. 4619 of Lecture Notes in Computer Science. Springer, 2007, vol. 4619, 27-38
- **YUI NOMA ; MAKIKO KONOSHIMA.** Markov Chain Monte Carlo for Arrangement of Hyperplanes In Locality-Sensitive Hashing. *Journal of Information Processing,* 18 March 2013, vol. 22 (1
- **JIM LAMBERS.** *Three-Dimensional Coordinate Systems,* October 2009